(19) Europäisches Patentamt
European Patent Office
Office européen des brevets

(11) **EP 3 383 089 A1**

(12) **EUROPEAN PATENT APPLICATION**
published in accordance with Art. 153(4) EPC

(43) Date of publication:
**03.10.2018 Bulletin 2018/40**

(51) Int Cl.:
**H04W 24/08** (2009.01)

(21) Application number: **16867882.9**

(22) Date of filing: **08.11.2016**

(86) International application number:
**PCT/CN2016/105105**

(87) International publication number:
**WO 2017/088658 (01.06.2017 Gazette 2017/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.11.2015 CN 201510849028**

(71) Applicant: **ZTE Corporation**
**Shenzhen, Guangdong 518057 (CN)**

(72) Inventors:
• **WU, Hao**
**Shenzhen**
**Guangdong 518057 (CN)**
• **CHEN, Yijian**
**Shenzhen**
**Guangdong 518057 (CN)**

• **LU, Zhaohua**
**Shenzhen**
**Guangdong 518057 (CN)**
• **XIAO, Huahua**
**Shenzhen**
**Guangdong 518057 (CN)**
• **LI, Yong**
**Shenzhen**
**Guangdong 518057 (CN)**
• **CAI, Jianxing**
**Shenzhen**
**Guangdong 518057 (CN)**
• **WANG, Yuxin**
**Shenzhen**
**Guangdong 518057 (CN)**

(74) Representative: **Aipex B.V.**
**World Trade Center Rotterdam / unit 607**
**Beursplein 37**
**3011 AA Rotterdam (NL)**

(54) **METHOD AND DEVICE FOR ACQUIRING CHANNEL INFORMATION**

(57)     Provided are a method and device for acquiring channel information. The method includes measuring a measurement pilot signal transmitted on a first carrier frequency and acquiring a first channel coefficient matrix between the measurement pilot signal and a receiving antenna; and processing the first channel coefficient matrix and acquiring a second channel coefficient matrix on a second carrier frequency.

Measure a measurement pilot signal transmitted on a first carrier frequency F1 and acquire a first channel coefficient matrix between the measurement pilot signal on the F1 and a receiving antenna — 110

Process the first channel coefficient matrix and acquire a second channel coefficient matrix on a second carrier frequency — 120

Acquire a channel coefficient covariance matrix on the second carrier frequency through a specified algorithm by using the second channel coefficient matrix acquired on M resource elements — 130

FIG. 1

**Description**

**TECHNICAL FIELD**

The present disclosure relates to wireless communication, for example, relates to a method and device for acquiring channel information.

**BACKGROUND**

In a wireless communication system, a transmitting end and a receiving end use multiple antennas by means of spatial multiplexing to acquire a higher rate. Compared with a general spatial multiplexing method, an enhanced technique is that the receiving end feeds back channel information to the transmitting end and the transmitting end uses a transmit precoding technique according to the acquired channel information, greatly improving transmission performance. In Single-user Multi-input Multi-output (SU-MIMO), channel feature vector information is used for precoding. In Multi-user Multi-input Multi-output (MU-MIMO), more accurate channel information is required.

A Time Division Duplexing (TDD) system can acquire channel information through the reciprocity of uplink and downlink channels, that is, the TDD system can measure the uplink channel by using an uplink Sounding Reference Signal (SRS) to acquire a channel coefficient matrix $H_u$ and then acquire a downlink channel coefficient matrix $H_d$ assuming that the reciprocity $H_d = H_u^H$ exists.

However, in a Frequency Division Duplex (FDD) system, it is difficult to acquire accurate downlink channel information through the above-mentioned reciprocity method, except for some line-of-sight scenes having strong correlations. Therefore, in the 3rd Generation Partnership Project (3GPP) Long Term Evolution (LTE) plan, channel information is fed back using a simple codebook-based. The channel information is quantized and fed back by the terminal generally by using an implicit quantization and feedback method.

Implicit feedback of Channel State Information (CSI) includes Channel Quality Indication (CQI), Precoding Matrix Indicator (PMI) and Rank Indicator (RI).

CQI is an indicator of quality of the downlink channel. In the 36-213 protocol, integer values 0 to 15 represent CQIs at different levels which correspond to their respective modulation modes and code rates. RI is used for describing the number of spatially independent channels and corresponds to a rank of a channel response matrix. A user equipment (UE) needs to feed back RI information in an open-loop spatial multiplexing mode and a closed-loop spatial multiplexing mode. In other modes, the RI information does not need to be fed back. The rank of the channel coefficient matrix corresponds to the number of layers. PMI feeds back the best precoding information. PMI indicates a code word that best matches the feature of the current channel in an agreed codebook based on an index feedback.

The cost of the quantization feedback of channel information is larger, for example, in LTE-Advanced (LTE-A), 4Tx and 8Tx codebooks have 256 code words, requiring 8 bits, and multiple sub-bands need to be fed back, thereby incurring large cost. With the development of the multi-antenna technology, the number of antennas is increasing. This means that the dimension of a channel coefficient matrix is getting larger and larger and the computational amount of quantization feedback of channel information is increasing. Moreover, the number of required code words grows exponentially, bringing great challenges to costs and complexity of a terminal and incurring large feedback overheads.

In general, acquisition of CSI under FDD is faced with more technical problems when the number of antennas is larger and the channel dimension is higher. These technical problems are described as follows.

Costs and coverage problems of Channel State Information-Reference Signals (CSI-RSs) have not been effectively solved (pilot resources are limited); the overheads of the CSI feedback are still large in the case of high-dimension antennas (the overheads increase significantly as the antenna dimension increases); feedback precision of non-strongly correlated channels is low, and available feedback technologies and acceptable overheads can hardly be found to obtain sufficient CSI precision (a large number of paths in multipath transmission makes it difficult to effectively increase quantization efficiency); and the complexity of CSI quantization on a terminal is high (the code word selection complexity is high).

A traditional implicit feedback method has significant differences in complexity, overheads and performance compared with a method for obtaining CSI by using reciprocity in a TDD system. However, an FDD system cannot obtain accurate CSI by using use the reciprocity as easily as the TDD system does because the FDD system lacks an effective reciprocal utilization method. This is a major problem in the related art.

**SUMMARY**

The present disclosure provides a method and device for acquiring channel information to reduce system feedback overheads.

The present disclosure provides a method for acquiring channel information. The method includes:

measuring a measurement pilot signal transmitted on a first carrier frequency and acquiring a first channel coefficient matrix between the measurement pilot signal and a receiving antenna; and

processing the first channel coefficient matrix and acquiring a second channel coefficient matrix on a second carrier frequency.

Optionally, the processing the first channel coefficient matrix and acquiring the second channel coefficient matrix on the second carrier frequency includes:

transforming the first channel coefficient matrix into a channel coefficient matrix in a specified domain by using a first matrix Q; and

adjusting a working frequency of the channel coefficient matrix in the specified domain by using a second matrix P, and transforming the channel coefficient matrix in the specified domain into a second channel coefficient matrix in an original domain.

The second matrix P is obtained by linearly transforming phases of elements in a transpose matrix of the first matrix Q according to a ratio of the first carrier frequency to the second carrier frequency.

Optionally, the first matrix Q is determined according to a topology and/or a polarization mode of an antenna of a base station.

Optionally, a column vector in the first matrix Q is a vector composed of complex numbers each of which has a modulus of 1, or a Kronecker product of the vector composed of the complex numbers each of which has a modulus of 1.

Optionally, the processing the first channel coefficient matrix and acquiring the second channel coefficient matrix on the second carrier frequency includes:

decomposing the first channel coefficient matrix into K channel components;

adjusting N channel components in the K channel components according to the first carrier frequency and the second carrier frequency, where K and N are integers and $1 \leq N \leq K$; and

combining the adjusted K channel components and acquiring the second channel coefficient matrix on the second carrier frequency.

Optionally, the decomposing the first channel coefficient matrix into the K channel components is implemented by using one of the following modes:

a discrete Fourier transform matrix;

eigenvalue decomposition or singular value decomposition; and

a Kronecker product of the discrete Fourier transform matrix.

Optionally, the adjusting the N channel components in the K channel components according to the first carrier frequency and the second carrier frequency includes:
adjusting phase responses of the N channel components in the K channel components according to a function of the first carrier frequency and the second carrier frequency, where the adjusted phase response is a linear function or a nonlinear function of an original phase.

Optionally, the method further includes:
acquiring a channel coefficient covariance matrix on the second carrier frequency through a specified algorithm by using the second channel coefficient matrix acquired on M resource elements, where M is an integer and $M \geq 1$.

The present disclosure further provides a device for acquiring channel information. The device includes:

a measuring module configured to measure a measurement pilot signal transmitted on a first carrier frequency and acquire a first channel coefficient matrix between the measurement pilot signal and a receiving antenna; and

a first processing module configured to process the first channel coefficient matrix and acquire a second channel coefficient matrix on a second carrier frequency.

Optionally, the first processing module is configured to transform the first channel coefficient matrix into a channel coefficient matrix in a specified domain by using a first matrix Q; and adjust a working frequency of the channel coefficient matrix in the specified domain by using a second matrix P and transform the channel coefficient matrix in the specified domain into a second channel coefficient matrix in an original domain, where the second matrix P is obtained by linearly transforming phases of elements in a transpose matrix of the first matrix Q according to a ratio of the first carrier frequency to the second carrier frequency, the first matrix Q is determined according to a topology and/or a polarization mode of an antenna of a base station, a column vector in the first matrix Q is a vector composed of complex numbers each of which has a modulus of 1, or a Kronecker product of the vector composed of the complex numbers each of which has a modulus of 1.

Optionally, the first processing module is configured to decompose the first channel coefficient matrix into K channel components; adjust N channel components in the K channel components according to the first carrier frequency and the second carrier frequency, where K and N are integers and $1 \leq N \leq K$; and combine the adjusted K channel components and acquire the second channel coefficient matrix on the second carrier frequency.

Optionally, the first processing module decomposes the first channel coefficient matrix into the K channel components by using one of the following modes: a discrete Fourier transform matrix; eigenvalue decomposition or singular value decomposition; and a Kronecker product of the discrete Fourier transform matrix.

Optionally, the adjusting the N channel components in the K channel components by the first processing module according to the first carrier frequency and the second carrier frequency includes:

adjusting phase responses of the N channel components in the K channel components according to a function of the first carrier frequency and the second carrier frequency, where the adjusted phase response is a linear function or a nonlinear function of an original phase.

Optionally, the first processing module is further configured to acquire a channel coefficient covariance matrix on the second carrier frequency through a specified algorithm by using the second channel coefficient matrix acquired on M resource elements, where M is an integer and $M \geq 1$.

The present disclosure further provides a method for acquiring channel information. The method includes:

receiving, by a first communication node, a measurement pilot signal sent by a second communication node;

estimating, by the first communication node, a channel coefficient matrix between the first communication node and the second communication node according to the measurement pilot signal; and

sending, by the first communication node, information about the channel coefficient matrix to a third communication node.

Optionally, the sending the information about the channel coefficient matrix to the third communication node by the first communication node includes:

decomposing the channel coefficient matrix into K channel components by the first communication node, and

sending information about the K channel components to the third communication node.

Optionally, the first communication node decomposes the channel coefficient matrix into the K channel components by using a discrete Fourier transform; and
the first communication node sends the K channel components and an index number of each column used in the discrete Fourier transform to the third communication node.

Optionally, the first communication node uses a Kronecker product of a discrete Fourier transform matrix to decompose the channel coefficient matrix into the K channel components.

The first communication node sends the K channel components and a discrete Fourier transform vector index number involved in the used Kronecker product of the discrete Fourier transform matrix to the third communication node.

The present disclosure further provides a device for acquiring channel information. The device includes:

a receiving module, which is configured to receive a measurement pilot signal sent by a second communication node;

a first processing module, which is configured to estimate a channel coefficient matrix between a current communication node and the second communication node according to the measurement pilot signal; and

a sending module, which is configured to send information about the channel coefficient matrix to a third communication node.

Optionally, the second processing module is further configured to decompose the information about the channel coefficient matrix into K channel components.

The sending module is configured to send information about the K channel components to the third communication node.

Optionally, the second processing module is further configured to decompose the channel coefficient matrix into the K channel components by using a discrete Fourier transform.

The information about the K channel components sent by the sending module includes the K channel components and an index number of each column used in the discrete Fourier transform.

Optionally, the second processing module is configured to decompose the channel coefficient matrix into the K channel components by using a Kronecker product of a discrete Fourier transform matrix.

The information about the K channel components sent by the sending module includes the K channel components and a discrete Fourier transform vector index number involved in the Kronecker product of the discrete Fourier transform matrix.

The present disclosure further provides a method for acquiring channel information. The method includes:

receiving information about a channel coefficient matrix sent by a communication node; and
processing the information about the channel coefficient matrix and acquiring the channel coefficient matrix.

Optionally, the received information about the channel coefficient matrix includes information about K channel components.

The processing the information about the channel coefficient matrix and acquiring the channel coefficient matrix includes:

adjusting N channel components in the K channel components and then combining the K channel components to acquire the channel coefficient matrix, where N and K are integers and $1 \le N \le K$.

Optionally, the adjusting the N channel components in the K channel components includes:

adjusting phase responses of the N channel components in the K channel components by using a function of a carrier frequency, where the adjusted phase response is a linear function or a nonlinear function of an original phase.

The present disclosure further provides a device for acquiring channel information. The device includes:

a second receiving module configured to receive information about a channel coefficient matrix sent by a communication node; and
a third processing module configured to process the information about the channel coefficient matrix and acquire the channel coefficient matrix.

Optionally, the information about the channel coefficient matrix received by the second receiving module includes information about K channel components.

The third processing module is configured to adjust N channel components in the K channel components and then combine the K channel components to acquire the channel coefficient matrix, where N and K are integers and $1 \le N \le K$.

Optionally, the adjusting the N channel components in the K channel components by the third processing module includes: adjusting phase responses of the N channel components in the K channel components by using a function of a carrier frequency, where the adjusted phase response is a linear function or a nonlinear function of an original phase.

The present disclosure further provides a non-transient computer-readable storage medium storing computer-executable instructions which are configured to execute any method described above.

The present disclosure further provides an electronic device. The device includes:

at least one processor; and

a memory that is connected to and communicates with the at least one memory.

The memory stores instructions executable by the at least one processor. The execution of the instructions by the at least one processor causes the at least one processor to execute the following method:

measuring a measurement pilot signal transmitted on a first carrier frequency and acquiring a first channel coefficient matrix between the measurement pilot signal and a receiving antenna; and

processing the first channel coefficient matrix and acquiring a second channel coefficient matrix on a second carrier frequency.

The present disclosure further provides an electronic device. The device includes:

at least one processor; and

a memory that is connected to and communicates with the at least one memory.

The memory stores instructions executable by the at least one processor. The execution of the instructions by the at least one processor causes the at least one processor to execute the following method:

receiving, by a first communication node, a measurement pilot signal sent by a second communication node;

estimating, by the first communication node, a channel coefficient matrix between the first communication node and the second communication node according to the measurement pilot signal; and

sending, by the first communication node, information about the channel coefficient matrix to a third communication node.

The present disclosure further provides a non-transient computer-readable storage medium, which is configured to store computer-executable instructions for executing any method described above.
The present disclosure further provides an electronic device. The device includes:

at least one processor; and

a memory that is connected to and communicates with the at least one memory.

The memory stores instructions executable by the at least one processor. The execution of the instructions by the at least one processor causes the at least one processor to execute the following method:

receiving information about a channel coefficient matrix sent by a communication node; and

processing the information about the channel coefficient matrix and acquiring the channel coefficient matrix.

In sum, the present disclosure provides a method and device for acquiring channel information to reduce system feedback overheads.

**BRIEF DESCRIPTION OF DRAWINGS**

FIG. 1 is a flowchart of a method for acquiring channel information according to an embodiment of the present disclosure.

FIG. 2 is a schematic diagram of a principle of acquiring a second channel coefficient matrix according to an embodiment of the present disclosure.

FIG. 3 is a schematic diagram of a device for acquiring channel information according to an embodiment 1 of the present disclosure.

FIG. 4 is a schematic diagram of a device for acquiring channel information according to an embodiment 2 of the present disclosure.

FIG. 5 is a schematic diagram of a device for acquiring channel information according to an embodiment 3 of the present disclosure.

FIG. 6 is a structure diagram of an electronic device according to an embodiment of the present disclosure.

**DETAILED DESCRIPTION**

If not in collision, the embodiments described herein and the features thereof can be combined with each other.

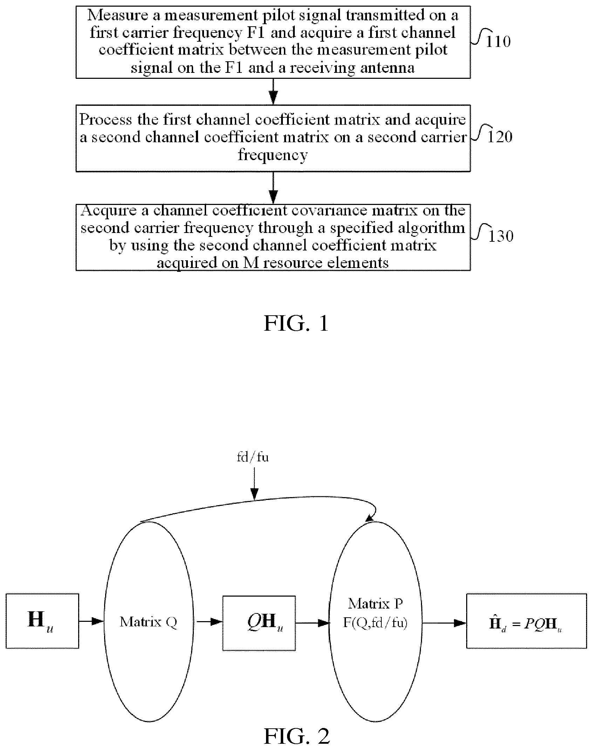

FIG. 1 is a flowchart of a method for acquiring channel information according to an embodiment of the present disclosure.

In step 110, a measurement pilot signal transmitted on a first carrier frequency F1 is measured and a first channel coefficient matrix $H_1$ between the measurement pilot signal on the F1 and a receiving antenna is acquired.

In step 120, the first channel coefficient matrix $H_1$ is processed and a second channel coefficient matrix $H_2$ on a second carrier frequency F2 is acquired.

In an alternative embodiment, the principle of processing the first channel coefficient matrix $H_1$ in step 120 is illustrated in FIG. 2.

In step 1210, the first channel coefficient matrix $H_1$ is linearly transformed into a domain defined based on base vectors in a first matrix Q, and a channel coefficient matrix estimation $\hat{H}_1$ is, where $\hat{H}_1 = QH_1$.

Optionally, the linear transformation matrix is the first matrix Q, and the first matrix Q is determined according to antenna topology and polarization configurations of a base station.

Column vectors in the first matrix Q are all in the form of $W_{az}^i \otimes W_{el}^j \otimes W_{pol}^k$. $W_{az}^i$, $W_{el}^j$, $W_{pol}^k$ is a discrete Fourier transform (DFT) vector or a vector composed of complex numbers, where a modulus of each of the complex numbers is 1.

In step 1220, a second matrix P is obtained by linearly transforming phases of elements in a transpose matrix of the first matrix Q by using the ratio of F1 to F2, where P = F (Q, F1, F2) and F is a nonlinear function of Q.

In step 1230, the base station performs linear transform to $\hat{H}_1$ by using the second matrix P.

In step 130, a channel coefficient covariance matrix on the second carrier frequency through a specified algorithm by using the second channel coefficient matrix acquired on M resource elements, where M is an integer and M ≥ 1.

After a channel coefficient matrix estimation $\hat{H}_2$ on F2 is acquired by using steps 110 and 120, due to the effects of factors such as random phases and path delays, $\hat{H}_2$ is not an accurate estimation of the channel coefficient matrix on F2. Precoding transmission and/or precoding pilots on F2 are based on statistical channel information on F2, that is, the covariance matrix R2 of the channel coefficient matrix on F2. R2 is acquired on the basis of the channel coefficient matrix estimation $\hat{H}_2$ on F2 acquired by using step 120 and may be acquired by statistical average over the M resource elements (REs). A downlink channel coefficient matrix predicted on the ith RE is $\hat{H}_d$, so R2 is predicted as:

$$\hat{R}_2 = \frac{1}{N} \sum_{i=1}^{N} \hat{H}_2^i \hat{H}_2^{iH} \tag{1}$$

As a result of channel acquisition on F2, $\hat{R}_2$ may be used for at least one of beamforming, precoding and precoding pilots.

Compared with related methods, the method of this embodiment has the following advantages:

A. The method of this embodiment greatly reduces feedback overheads. The method of this embodiment uses channel measurement on F1 to acquire channel information on F2, not requiring CSI measurement, and quantification and feedback. This greatly reduces system feedback overheads.

B. It is easy to use channel information to reduce required pilot resources. In a scenario where there are many antennas, after the channel information on F2 is acquired, the channel information can be used for channel dimension reduction to reduce required pilot resources.

C. Implementation complexity is low. Prediction of the channel information on F2 and adjustment of a working frequency are all linear transformations and thus have low implementation complexity.

Embodiment 1:

For a one-dimensional (1D) antenna array system in which an uplink channel and a downlink channel operate at different frequencies and the number of antennas is Antnum, this embodiment uses a near-approximation mode. After the uplink channel coefficient matrix $H_u$ is acquired through uplink channel measurement in step 110, the two steps described below are used to process uplink $H_u$ to approximate downlink $H_d(f_i)$.

In step 1211, the channel is transformed into a specified domain by using a first matrix Q, and the channel coefficient matrix in the specified domain is obtained. The first matrix Q correlates with the antenna topology. Here a discrete Fourier transform (DFT) is performed to the 1D antenna array. The transformation matrix Q corresponding to DTP transformation of an $N_p$ point is assumed as:

$$Q = \begin{bmatrix} e^{j\frac{2\pi}{N_p}(n=0)(k=0)} & e^{j\frac{2\pi}{N_p}(n=1)(k=0)} & \cdots & e^{j\frac{2\pi}{N_p}(n=Antnum)(k=0)} \\ e^{j\frac{2\pi}{N_p}(n=0)(k=1)} & e^{j\frac{2\pi}{N_p}(n=1)(k=1)} & \cdots & e^{j\frac{2\pi}{N_p}(n=Antnum)(k=1)} \\ \cdots & \cdots & \cdots & \cdots \\ e^{j\frac{2\pi}{N_p}(n=0)(k=N_p)} & e^{j\frac{2\pi}{N_p}(n=1)(k=N_p)} & \cdots & e^{j\frac{2\pi}{N_p}(n=Antnum)(k=N_p)} \end{bmatrix} \quad (2)$$

In step 1212, uplink and downlink working frequencies of the acquired channel coefficient matrix in the specified domain are adjusted by using the second matrix P, and then the channel is transformed to the original domain to acquire $\hat{\mathbf{H}}_d(f_i)$. $\hat{\mathbf{H}}_d(f_i)$ and $\mathbf{H}_d(f_i)$ are well reciprocal to each other. Here the following transformation matrix P can be used for the 1D antenna array:

$$P = \begin{bmatrix} e^{-j\frac{2\pi}{N_p}(n=0)(k=0)\cdot\frac{f_d}{f_u}} & e^{-j\frac{2\pi}{N_p}(n=0)(k=1)\cdot\frac{f_d}{f_u}} & \cdots & e^{-j\frac{2\pi}{N_p}(n=0)(k=N_p)\cdot\frac{f_d}{f_u}} \\ e^{-j\frac{2\pi}{N_p}(n=1)(k=0)\cdot\frac{f_d}{f_u}} & e^{-j\frac{2\pi}{N_p}(n=1)(k=1)\cdot\frac{f_d}{f_u}} & \cdots & e^{-j\frac{2\pi}{N_p}(n=1)(k=N_p)\cdot\frac{f_d}{f_u}} \\ \cdots & \cdots & \cdots & \cdots \\ e^{-j\frac{2\pi}{N_p}(n=Antnum)(k=0)\cdot\frac{f_d}{f_u}} & e^{-j\frac{2\pi}{N_p}(n=Antnum)(k=1)\cdot\frac{f_d}{f_u}} & \cdots & e^{-j\frac{2\pi}{N_p}(n=Antnum)(k=N_p)\cdot\frac{f_d}{f_u}} \end{bmatrix} \quad (3)$$

The acquired $\hat{\mathbf{H}}_d(f_i)$ is statistically averaged on M REs to acquire a downlink channel covariance matrix that can be used for downlink precoding pilots or data transmission.

Embodiment 2:

In the case of a two-dimensional (2D) antenna array, a method similar to the method used in the embodiment 1 is used, but corresponding matrixes Q and P may change.

An uplink channel coefficient matrix is acquired through uplink channel detection in step 110. Then the method in steps 1210 through 1230 is used to design Q and P and process the acquired uplink channel coefficient matrix. Each row/column vector in the Q and P is a Kronecker product of two DFT vectors. Thus, the channel coefficient matrix needs to be processed using matrixes Q and P matching the antenna array. Assuming that $N_h$ and $N_v$ denote the number of antennas per row and the number of antennas per column in the 2D antenna array respectively, and $O_h$ and $O_v$ denote a horizontal angle sampling coefficient and a vertical angle sampling coefficient respectively, then Q and P can be defined as:

$$Q = W_{az}^1 \otimes W_{el}^1 \quad (4)$$

$$P = W_{az}^2 \otimes W_{el}^2 \quad (5)$$

In the above formulas:

$$W_{az}^1 = \begin{bmatrix} e^{j\frac{2\pi}{N_p}(n=0)(k=0)} & e^{j\frac{2\pi}{N_p}(n=1)(k=0)} & \cdots & e^{j\frac{2\pi}{N_p}(n=Antnum)(k=0)} \\ e^{j\frac{2\pi}{N_p}(n=0)(k=1)} & e^{j\frac{2\pi}{N_p}(n=1)(k=1)} & \cdots & e^{j\frac{2\pi}{N_p}(n=Antnum)(k=1)} \\ \cdots & \cdots & \cdots & \cdots \\ e^{j\frac{2\pi}{N_p}(n=0)(k=N_p)} & e^{j\frac{2\pi}{N_p}(n=1)(k=N_p)} & \cdots & e^{j\frac{2\pi}{N_p}(n=Antnum)(k=N_p)} \end{bmatrix} \qquad (6)$$

$$W_{el}^1 = \begin{bmatrix} e^{j\frac{2\pi}{N_h O_h}(n=0)(k=0)} & e^{j\frac{2\pi}{N_h O_h}(n=1)(k=0)} & \cdots & e^{j\frac{2\pi}{N_h O_h}(n=N_h)(k=0)} \\ e^{j\frac{2\pi}{N_h O_h}(n=0)(k=1)} & e^{j\frac{2\pi}{N_h O_h}(n=1)(k=1)} & \cdots & e^{j\frac{2\pi}{N_h O_h}(n=N_h)(k=1)} \\ \cdots & \cdots & \cdots & \cdots \\ e^{j\frac{2\pi}{N_h O_h}(n=0)(k=N_h O_h)} & e^{j\frac{2\pi}{N_h O_h}(n=1)(k=N_h O_h)} & \cdots & e^{j\frac{2\pi}{N_h O_h}(n=N_h)(k=N_h O_h)} \end{bmatrix} \qquad (7)$$

$$W_{az}^2 = \begin{bmatrix} e^{-j\frac{2\pi}{N_h O_h}(n=0)(k=0)\frac{f_d}{f_u}} & e^{-j\frac{2\pi}{N_h O_h}(n=0)(k=1)\frac{f_d}{f_u}} & \cdots & e^{-j\frac{2\pi}{N_h O_h}(n=0)(k=N_h)\frac{f_d}{f_u}} \\ e^{-j\frac{2\pi}{N_h O_h}(n=1)(k=0)\frac{f_d}{f_u}} & e^{-j\frac{2\pi}{N_h O_h}(n=1)(k=1)\frac{f_d}{f_u}} & \cdots & e^{-j\frac{2\pi}{N_h O_h}(n=1)(k=N_h)\frac{f_d}{f_u}} \\ \cdots & \cdots & \cdots & \cdots \\ e^{-j\frac{2\pi}{N_h O_h}(n=N_h O_h)(k=0)\frac{f_d}{f_u}} & e^{-j\frac{2\pi}{N_h O_h}(n=N_h O_h)(k=1)\frac{f_d}{f_u}} & \cdots & e^{-j\frac{2\pi}{N_h O_h}(n=N_h O_h)(k=N_h)\frac{f_d}{f_u}} \end{bmatrix} \qquad (8)$$

$$W_{el}^2 = \begin{bmatrix} e^{-j\frac{2\pi}{N_h O_h}(n=0)(k=0)\frac{f_d}{f_u}} & e^{-j\frac{2\pi}{N_h O_h}(n=0)(k=1)\frac{f_d}{f_u}} & \cdots & e^{-j\frac{2\pi}{N_h O_h}(n=0)(k=N_h)\frac{f_d}{f_u}} \\ e^{-j\frac{2\pi}{N_h O_h}(n=1)(k=0)\frac{f_d}{f_u}} & e^{-j\frac{2\pi}{N_h O_h}(n=1)(k=1)\frac{f_d}{f_u}} & \cdots & e^{-j\frac{2\pi}{N_h O_h}(n=1)(k=N_h)\frac{f_d}{f_u}} \\ \cdots & \cdots & \cdots & \cdots \\ e^{-j\frac{2\pi}{N_h O_h}(n=N_h O_h)(k=0)\frac{f_d}{f_u}} & e^{-j\frac{2\pi}{N_h O_h}(n=N_h O_h)(k=1)\frac{f_d}{f_u}} & \cdots & e^{-j\frac{2\pi}{N_h O_h}(n=N_h O_h)(k=N_h)\frac{f_d}{f_u}} \end{bmatrix} \qquad (9)$$

The first matrix Q and the second matrix P constructed by the formulas (4) through (9) are substituted into steps 1210 through 1230 to calculate a prediction of the downlink channel coefficient matrix. Then, the formula (1) is used to perform statistically average to results of the predictions of the downlink channel coefficient matrix on the M REs to acquire a prediction of the downlink channel covariance matrix, and the prediction of the downlink channel covariance matrix is used as the final result of channel information acquisition.

Embodiment 3:

The methods described in the embodiment I and the embodiment II can also be regarded as decomposing the channel coefficient matrix $\mathbf{H}_u$ into $N_p$ or $N_h O_h N_v O_v$ components, performing carrier frequency adjustment on the phase responses of these components, and then combining the adjusted components.

The method for decomposing the channel coefficient matrix is applicable to the matrix associated with the antenna topology and/or polarization mode.

In addition, after the channel coefficient matrix is decomposed into the K channel components, it is feasible to select N channel components ($1 \leq N \leq K$) from the K channel components to perform the working frequency adjustment of the phase response.

For example, for the 1D antenna array, when some scatterers are on a vertical line of an antenna of the base station, or, for the 2D antenna array, when some scatterers are in a normal direction of an antenna plane of the base station, the base station can measure that a horizontal angle of arrival and a vertical angle of arrival of a user are 90°. After the uplink channel coefficient matrix is decomposed by using the matrix Q calculated by formulas (4), (6) and (7), T components in the acquired components are 0. In this case, it only needs to select $N_h O_h N_v O_v$-T components that are not 0 for the working frequency adjustment, that is, the $N_h O_h N_v O_v$-T components are multiplied by $f_d/f_u$. $f_d$ is a downlink channel carrier frequency and $f_u$ is an uplink channel carrier frequency. After the adjustment is completed, all $N_h O_h N_v O_v$ channel components are combined into a complete channel coefficient matrix.

Embodiment 4:

In addition to the method of decomposing the channel coefficient matrix into K channel components by using a DFT matrix and/or a Kronecker product of the DFT matrix to as described in embodiments I to III, a method of decomposing the channel coefficient matrix into K channel components by eigenvalue decomposition or singular value decomposition can also be used.

For example, in a 2D antenna array system, uplink channel measurement is used to predict a downlink channel coefficient matrix. Singular value decomposition is performed for the result $\mathbf{H}_u$ of the uplink channel measurement. P singular values, L left singular vectors and R right singular vectors can be selected. There are a total of K = P + L + R channel coefficient matrix components. An arrangement of the P singular values can form a matrix D. Elements on a main diagonal or an auxiliary diagonal are the P singular values. Other elements are 0. For each left singular vector $u_l$, the phase of each element is multiplied by $f_d/f_u$ so that L new vectors $u_l^{'}$ are obtained. The L new vectors $u_l^{'}$ can be arranged into a matrix:

$$U = \begin{bmatrix} u_1^{'} & \cdots & u_L^{'} \end{bmatrix}$$

For each right singular vector $v_r$, the phase of each element is multiplied by $f_d/f_u$ so that R new vectors $v_r^{'}$ are obtained. The R new vectors $v_r^{'}$ can be arranged into a matrix:

$$V = \begin{bmatrix} v_1^{'} & \cdots & v_R^{'} \end{bmatrix}$$

In this example, the phase after the working frequency adjustment is a linear function of the original phase. Next, matrix multiplication is performed for U, D and V to predict the complete downlink channel coefficient matrix.

Embodiment 5:

For the scenario described in the embodiment 4, in addition to directly transformation on the phases of the left and right singular vectors, a method of estimating the closest DTF vectors thereof and then converting the phases of the DTF vectors can also be used. For each left singular vector $u_l$, the DFT vector $e_l^h$ is obtained as follows:

$$\max_{e_l^h} e_l^{hH} u_l u_l^{H} e_l^h$$

The phase of $e_l^h$ is multiplied by $f_d/f_u$ to form a matrix $E_h = \begin{bmatrix} e_1^h & \cdots & e_L^h \end{bmatrix}$. Similarly, for each right singular vector $v_r$, the DFT vector $e_r^v$ is obtained as follows:

$$\max_{e_r^v} e_r^{vH} v_l v_l^H e_r^v$$

The phase of $e_r^v$ is multiplied by $f_d/f_u$ to form a matrix $E_h = \begin{bmatrix} e_1^h & \cdots & e_L^h \end{bmatrix}$. In this example, the phase of the adjusted matrix is a nonlinear function of the phases of the original K channel components. Next, matrix multiplication is performed on $E_h$, $D$ and $E_v$ to obtain a downlink channel coefficient matrix.

Embodiment 6:

In the methods described in the embodiment 4 and the embodiment 5, the K = P + L + R components obtained by decomposition are all used for phase adjustment. In fact, it is feasible to select some of the components for phase adjustment. For example, when a rank of a channel coefficient matrix $\mathbf{H}_u$ is both less than the number of rows and less than the number of columns, that is, rank < P, rank < L and rank<R, the number of resolvable paths is less than the number of rows and columns. From the P singular values, singular values having larger modulus are selected, and the quantity of the selected singular values is rank. Left singular vectors $u_1\cdots u_{rank}$ and right singular vectors $v_1\cdots v_{rank}$ corresponding to the selected singular values with the quantity being rank are selected. Phases of $u_1\cdots u_{rank}$ and $v_1\cdots v_{rank}$ are adjusted by using the linear phase adjustment method in the embodiment 4 or the non-linear phase adjustment method in the embodiment 5 to obtain 2*rank vectors $u'_1\cdots u'_{rank}$ and $v_1'\cdots v_{rank}'$. The 2*rank vectors are DFT vectors (like the method in the embodiment 5) or results of the linear operation of phases of the original singular vectors (like the method in the embodiment 4). Finally, the components whose phases have been adjusted are combined according to the following formula to obtain a downlink channel coefficient matrix:

$$\hat{H}_d = \sum_{i=1}^{rank} P_i u_i' v_i'^H \, 。$$

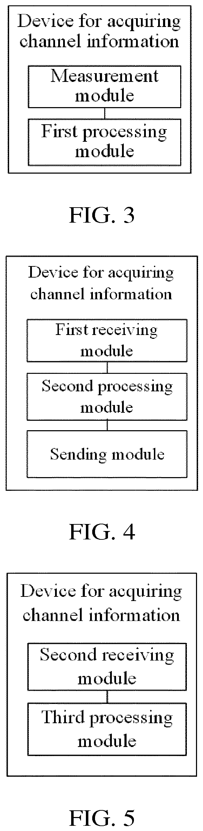

FIG. 3 is a schematic diagram of a device for acquiring channel information according to an embodiment 1 of the present disclosure. As shown in FIG. 3, the device of this embodiment includes a measurement module and a first processing module.

The measuring module is configured to measure a measurement pilot signal transmitted on a first carrier frequency and acquire a first channel coefficient matrix between the measurement pilot signal and a receiving antenna.

The first processing module is configured to process the first channel coefficient matrix and acquire a second channel coefficient matrix on a second carrier frequency.

In an optional embodiment, the first processing module may be configured to transform the first channel coefficient matrix into a channel coefficient matrix in a specified domain by using a first matrix Q; and, by using a second matrix P, adjust a working frequency of the channel coefficient matrix in the specified domain and transform the channel coefficient matrix in the specified domain into a second channel coefficient matrix in an original domain.

The second matrix P is obtained by linearly transforming phases of elements in a transpose matrix of the first matrix Q according to a ratio of the first carrier frequency to the second carrier frequency.

The first matrix Q is determined according to a topology and/or a polarization mode of an antenna of a base station.

In an optional embodiment, a column vector in the first matrix Q is a vector composed of complex numbers each of which has a modulus of 1, or a Kronecker product of the vector composed of the complex numbers, each of which has a modulus of 1.

In an optional embodiment, the first processing module may be configured to decompose the first channel coefficient matrix into K channel components; adjust N channel components in the K channel components according to the first carrier frequency and the second carrier frequency, where K and N are integers and $1 \leq N \leq K$; and combine the K channel components after adjustment to acquire the second channel coefficient matrix on the second carrier frequency.

In an optional embodiment, the first processing module decomposes the first channel coefficient matrix into the K channel components by using one of the following modes: a discrete Fourier transform matrix; eigenvalue decomposition or singular value decomposition; and a Kronecker product of the discrete Fourier transform matrix.

In an optional embodiment, the process of adjusting, by the first processing module, the N channel components in the K channel components according to the first carrier frequency and the second carrier frequency may be as follows.

Phase responses of the N channel components in the K channel components are adjusted according to a function of the first carrier frequency and the second carrier frequency such that the adjusted phase response is a linear function or a nonlinear function of an original phase.

In an optional embodiment, the first processing module may further be configured to acquire a channel coefficient covariance matrix on the second carrier frequency through a specified algorithm by using the second channel coefficient matrix acquired on M resource elements, where M is an integer and M ≥ 1.

The method of this embodiment can not only be used by a base station to estimate an uplink channel to predict a downlink channel, but can also be used for the following scenarios.

A communication node A sends a pilot sequence to a communication node B, and the communication node B estimates a channel coefficient matrix between A and B.

The communication node B reports K components of the channel coefficient matrix between A and B to a communication node C.

The communication node C performs carrier frequency conversion for N components (1 ≤ N ≤ K) of the K components and then combines the K components to acquire the channel coefficient matrix between the node A and the node B.

For example, in a cooperative communication system, A is a terminal, B is a base station, C is a central processing unit that processes information of multiple base stations, and C needs to acquire channel information between terminals and base stations for processing the multiple base stations. Therefore, the bases station B needs to transmit the acquired information to C. The terminal A sends SRS to the base station B. The base station B estimates a channel coefficient matrix $\mathbf{H}_{AB}$ between A and B and uses a DFT matrix or a Kronecker product of the DFT matrix to decompose $\mathbf{H}_{AB}$ into multiple components $QH_{AB}$ according to an antenna topology and/or polarization mode. Then, the base station B reports $QH_{AB}$ and indexes of DFT vectors involved in the DFT matrix Q to the central processing unit C. C constructs Q according to the indexes of the DFT vectors, and then constructs the second matrix P by using a function F (Q, F1, F2) for working frequency transformation, and then uses P to combine the received multiple components into a complete channel coefficient matrix between A and B, namely $PQH_{AB}$. For a 1D antenna array, for construction of Q and P, see formulas (2) and (3), and to improve transmission efficiency, the formula Np < Antnum applies. For a 2D antenna array, for construction of Q and P, see formulas (4) and (9), and formulas $O_h < 1$ and $O_v < 1$ are applicable to oversampling factors.

In this embodiment, the communication node B may also be an access point or a transmission point that has a radio frequency transceiving function and a baseband processing function, and the communication node C is a central processing unit connected to the communication node B through a wired or wireless link. Since the communication node C needs to acquire and jointly process channel information between different base stations/access points/transmission points and terminals, so the communication node B needs to report the channel information between the node B and the terminals to the communication node C for the jointly processing of the channel information by the node C. Through the method in this embodiment, the amount of payloads of the information reported by the communication node B to the communication node C is reduced, and thus the information reporting efficiency is improved.

The method of the present disclosure reduces feedback overheads and terminal complexity, facilitates reduction of pilot resource requirements, and is easy to implement.

FIG. 4 is a schematic diagram of a device for acquiring channel information according to an embodiment 2 of the present disclosure. As shown in FIG. 4, the device of this embodiment includes a first receiving module, a second processing module and a sending module.

The first receiving module is configured to receive a measurement pilot signal sent by a second communication node.

The second processing module is configured to estimate a channel coefficient matrix between a current communication node and the second communication node according to the measurement pilot signal.

The sending module is configured to send information about the channel coefficient matrix to a third communication node.

In an optional embodiment, the second processing module is further configured to decompose the information about the channel coefficient matrix into K channel components.

The sending module is further configured to send information about the K channel components to the third communication node.

In an optional embodiment, the second processing module is further configured to use a discrete Fourier transform to decompose the channel coefficient matrix into the K channel components.

The information about the K channel components sent by the sending module includes the K channel components and an index number of each column used in the discrete Fourier transform.

In an optional embodiment, the second processing module is further configured to use a Kronecker product of a discrete Fourier transform matrix to decompose the channel coefficient matrix into the K channel components.

The information about the K channel components sent by the sending module includes the K channel components and a discrete Fourier transform vector index number involved in the Kronecker product of the discrete Fourier transform matrix.

FIG. 5 is a schematic diagram of a device for acquiring channel information according to an embodiment 3 of the present disclosure. As shown in FIG. 5, the device of this embodiment includes a second receiving module and a third processing module.

The second receiving module is configured to receive information about a channel coefficient matrix sent by a communication node.

The third processing module is configured to process the information about the channel coefficient matrix to acquire the channel coefficient matrix.

In an optional embodiment, the information about the channel coefficient matrix received by the second receiving module includes information about K channel components.

The third processing module is configured to adjust N channel components in the K channel components and then combine the K channel components to acquire the channel coefficient matrix, where N and K are integers and $1 \leq N \leq K$.

In an optional embodiment, the process of adjusting the N channel components in the K channel components by the third processing module includes: adjusting phase responses of the N channel components in the K channel components by using a function of a carrier frequency. The phase response after the adjustment is a linear function or a nonlinear function of an original phase. The present disclosure further provides a non-transient computer-readable storage medium, which is configured to store computer-executable instructions for executing the method in any embodiment described above.

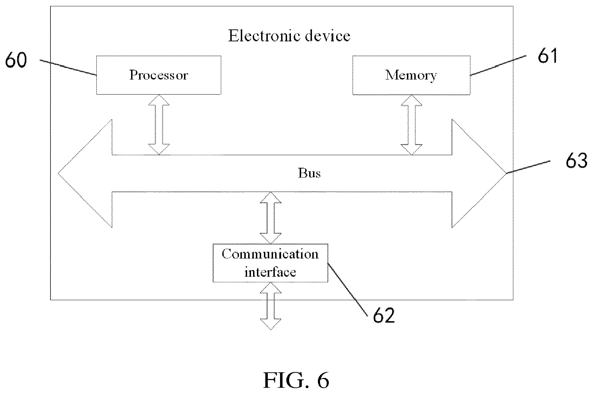

The present disclosure further provides a structure diagram of a first electronic device. Referring to FIG. 6, the first electronic device includes:

at least one processor 60 (FIG. 6 shows one processor 60 by way of example), a memory 61. The first electronic device may further include, a communication interface 62 and a bus 63. The processor 60, the communication interface 62 and the memory 61 can communicate with each other through the bus 63. The communication interface 62 may be used for information transmission. The processor 60 may call logic instructions in the memory 61 to perform the following method for acquiring channel information:

measuring a measurement pilot signal transmitted on a first carrier frequency to acquire a first channel coefficient matrix between the measurement pilot signal and a receiving antenna; and

processing the first channel coefficient matrix to acquire a second channel coefficient matrix on a second carrier frequency.

In addition, the logic instructions in the memory 61 may be implemented in the form of software function units and, when sold or used as an independent product, may be stored in a computer-readable storage medium.

As a computer-readable storage medium, the memory 61 is used for storing software programs and computer-executable programs, such as program instructions or modules corresponding to the method in embodiments of the present disclosure. The processor 60 runs the software programs, instructions and modules stored in the memory 61 to perform function applications and data processing, that is, to implement the above method for acquiring channel information in this embodiment.

The memory 61 may include a program storage region and a data storage region, where the program storage region may store an operating system and an application program required by at least one function while the data storage region may store data created depending on use of a terminal device. In addition, the memory 61 may include a high-speed random access memory, and may further include a non-volatile memory.

The present disclosure further provides a structure diagram of a second electronic device. The difference between the second electronic device and the first electronic device is that the processor can call logic instructions in the memory to perform the following method for acquiring channel information.

A first communication node receives a measurement pilot signal sent by a second communication node.

The first communication node estimates a channel coefficient matrix between the first communication node and the second communication node according to the measurement pilot signal.

The first communication node sends information about the channel coefficient matrix to a third communication node.

The present disclosure further provides a structure diagram of a third electronic device. The difference between the third electronic device and the first and second electronic devices is that the processor can call logic instructions in the memory to perform the following method for acquiring channel information

receiving information about a channel coefficient matrix sent by a communication node; and

processing the information about the channel coefficient matrix to acquire the channel coefficient matrix.

The technical solution of the present disclosure may be embodied in the form of a software product. The software product is stored in a storage medium and includes one or more instructions for enabling a computer device (which may be a personal computer, server, or network device, etc.) to perform all or part of the steps of the method provided in embodiments of the present disclosure. The foregoing storage medium may be a non-transient storage medium, such as a U disk, mobile hard disk, read only memory (ROM), random access memory (RAM), magnetic disk, optical disk or other mediums that can store program codes. Alternatively, the foregoing storage medium may be a transient storage medium. It will be understood by those of ordinary skill in the art that all or part of the steps in the method described above may be implemented by related hardware instructed by one or more programs, and these programs may be stored in a computer-readable storage medium such as a ROM, a magnetic disk, an optical disk or the like. Optionally, all or part of the steps in the embodiments described above may also be implemented using one or more integrated circuits. Each module in the above embodiments may be implemented by hardware, a software function module, or a combination of hardware and software.

**INDUSTRIAL APPLICABILITY**

The method and device for acquiring channel information provided by the present disclosure reduce system feedback overheads.

**Claims**

1. A method for acquiring channel information, comprising:

   measuring a measurement pilot signal transmitted on a first carrier frequency and acquiring a first channel coefficient matrix between the measurement pilot signal and a receiving antenna; and
   processing the first channel coefficient matrix and acquiring a second channel coefficient matrix on a second carrier frequency.

2. The method of claim 1, wherein the processing the first channel coefficient matrix and acquiring the second channel coefficient matrix on the second carrier frequency comprises:

   transforming the first channel coefficient matrix into a channel coefficient matrix in a specified domain by using a first matrix Q; and
   adjusting a working frequency of the channel coefficient matrix in the specified domain by using a second matrix P, and transforming the channel coefficient matrix in the specified domain into a second channel coefficient matrix in an original domain,
   wherein the second matrix P is obtained by linearly transforming phases of elements in a transpose matrix of the first matrix Q according to a ratio of the first carrier frequency to the second carrier frequency.

3. The method of claim 2, wherein the first matrix Q is determined according to a topology and/or a polarization mode of an antenna of a base station.

4. The method of claim 3, wherein a column vector in the first matrix Q is a vector composed of complex numbers each of which has a modulus of 1, or a Kronecker product of the vector composed of the complex numbers each of which has a modulus of 1.

5. The method of claim 1, wherein the processing the first channel coefficient matrix and acquiring the second channel coefficient matrix on the second carrier frequency comprises:

   decomposing the first channel coefficient matrix into K channel components;
   adjusting N channel components in the K channel components according to the first carrier frequency and the second carrier frequency, wherein K and N are integers and $1 \leq N \leq K$; and
   combining the adjusted K channel components and acquiring the second channel coefficient matrix on the second carrier frequency.

6. The method of claim 5, wherein the decomposing the first channel coefficient matrix into the K channel components is implemented by using one of the following modes:

   a discrete Fourier transform matrix;

eigenvalue decomposition or singular value decomposition; and
a Kronecker product of the discrete Fourier transform matrix.

7. The method of claim 5, wherein the adjusting the N channel components in the K channel components according to the first carrier frequency and the second carrier frequency comprises:
adjusting phase responses of the N channel components in the K channel components according to a function of the first carrier frequency and the second carrier frequency, wherein the adjusted phase response is a linear function or a nonlinear function of an original phase.

8. The method of any one of claims 1 to 7, further comprising:
acquiring a channel coefficient covariance matrix on the second carrier frequency through a specified algorithm by using the second channel coefficient matrix acquired on M resource elements, wherein M is an integer and $M \geq 1$.

9. A device for acquiring channel information, comprising:

a measuring module configured to measure a measurement pilot signal transmitted on a first carrier frequency and acquire a first channel coefficient matrix between the measurement pilot signal and a receiving antenna; and
a first processing module configured to process the first channel coefficient matrix and acquire a second channel coefficient matrix on a second carrier frequency.

10. The device of claim 9, wherein the first processing module is configured to transform the first channel coefficient matrix into a channel coefficient matrix in a specified domain by using a first matrix Q; and adjust a working frequency of the channel coefficient matrix in the specified domain by using a second matrix P and transform the channel coefficient matrix in the specified domain into a second channel coefficient matrix in an original domain, wherein the second matrix P is obtained by linearly transforming phases of elements in a transpose matrix of the first matrix Q according to a ratio of the first carrier frequency to the second carrier frequency, the first matrix Q is determined according to a topology and/or a polarization mode of an antenna of a base station, a column vector in the first matrix Q is a vector composed of complex numbers each of which has a modulus of 1, or a Kronecker product of the vector composed of the complex numbers each of which has a modulus of 1.

11. The device of claim 9, wherein the first processing module is configured to decompose the first channel coefficient matrix into K channel components; adjust N channel components in the K channel components according to the first carrier frequency and the second carrier frequency, wherein K and N are integers and $1 \leq N \leq K$; and combine the adjusted K channel components and acquire the second channel coefficient matrix on the second carrier frequency.

12. The device of claim 11, wherein the first processing module decomposes the first channel coefficient matrix into the K channel components by using one of the following modes: a discrete Fourier transform matrix; eigenvalue decomposition or singular value decomposition; and a Kronecker product of the discrete Fourier transform matrix.

13. The device of claim 11, wherein the adjusting the N channel components in the K channel components by the first processing module according to the first carrier frequency and the second carrier frequency comprises: adjusting phase responses of the N channel components in the K channel components according to a function of the first carrier frequency and the second carrier frequency, wherein the adjusted phase response is a linear function or a nonlinear function of an original phase.

14. The device of any one of claims 9 to 13, wherein the first processing module is further configured to acquire a channel coefficient covariance matrix on the second carrier frequency through a specified algorithm by using the second channel coefficient matrix acquired on M resource elements, wherein M is an integer and $M \geq 1$.

15. A method for acquiring channel information, comprising:

receiving, by a first communication node, a measurement pilot signal sent by a second communication node;
estimating, by the first communication node, a channel coefficient matrix between the first communication node and the second communication node according to the measurement pilot signal; and
sending, by the first communication node, information about the channel coefficient matrix to a third communication node.

16. The method of claim 15, wherein the sending the information about the channel coefficient matrix to the third communication node by the first communication node comprises:

   decomposing the information about the channel coefficient matrix into K channel components by the first communication node, and
   sending information about the K channel components to the third communication node.

17. The method of claim 16, wherein the first communication node decomposes the channel coefficient matrix into the K channel components by using a discrete Fourier transform; and
the first communication node sends the K channel components and an index number of each column used in the discrete Fourier transform to the third communication node.

18. The method of claim 16, wherein the first communication node decomposes the channel coefficient matrix into the K channel components by using a Kronecker product of a discrete Fourier transform matrix; and
the first communication node sends the K channel components and a discrete Fourier transform vector index number involved in the Kronecker product of the discrete Fourier transform matrix to the third communication node.

19. A device for acquiring channel information, comprising:

   a first receiving module configured to receive a measurement pilot signal sent by a second communication node;
   a second processing module configured to estimate a channel coefficient matrix between a current communication node and the second communication node according to the measurement pilot signal; and
   a sending module configured to send information about the channel coefficient matrix to a third communication node.

20. The device of claim 19, wherein the second processing module is further configured to decompose the channel coefficient matrix into K channel components, and the sending module is configured to send information about the K channel components to the third communication node.

21. The device of claim 20, wherein the second processing module is configured to decompose the channel coefficient matrix into the K channel components by using a discrete Fourier transform; and the information about the K channel components sent by the sending module comprises the K channel components and an index number of each column used in the discrete Fourier transform.

22. The device of claim 20, wherein the second processing module is configured to decompose the channel coefficient matrix into the K channel components by using a Kronecker product of a discrete Fourier transform matrix; and the information about the K channel components sent by the sending module comprises the K channel components and a discrete Fourier transform vector index number involved in the Kronecker product of the discrete Fourier transform matrix.

23. A method for acquiring channel information, comprising:

   receiving information about a channel coefficient matrix sent by a communication node; and
   processing the information about the channel coefficient matrix and acquiring the channel coefficient matrix.

24. The method of claim 23, wherein the received information about the channel coefficient matrix comprises information about K channel components; and
the processing the information about the channel coefficient matrix and acquiring the channel coefficient matrix comprises: adjusting N channel components in the K channel components and then combining the K channel components to acquire the channel coefficient matrix, wherein N and K are integers and $1 \leq N \leq K$.

25. The method of claim 24, wherein the adjusting the N channel components in the K channel components comprises: adjusting phase responses of the N channel components in the K channel components by using a function of a carrier frequency, wherein the adjusted phase response is a linear function or a nonlinear function of an original phase.

26. A device for acquiring channel information, comprising:

   a second receiving module configured to receive information about a channel coefficient matrix sent by a communication node; and
a third processing module configured to process the information about the channel coefficient matrix and acquire the channel coefficient matrix.

27. The device of claim 26, wherein the information about the channel coefficient matrix received by the second receiving module comprises information about K channel components; and the third processing module is configured to adjust N channel components in the K channel components and then combine the K channel components to acquire the channel coefficient matrix, wherein N and K are integers and $1 \leq N \leq K$.

28. The device of claim 27, wherein the adjusting the N channel components in the K channel components by the third processing module comprises: adjusting phase responses of the N channel components in the K channel components by using a function of a carrier frequency, wherein the adjusted phase response is a linear function or a nonlinear function of an original phase.

29. A non-transient computer-readable storage medium storing computer-executable instructions which are configured to execute the method of any one of claims 1 to 8, 15 to 18, and 23 to 25.

| Measure a measurement pilot signal transmitted on a first carrier frequency F1 and acquire a first channel coefficient matrix between the measurement pilot signal on the F1 and a receiving antenna | ⌒110 |

| Process the first channel coefficient matrix and acquire a second channel coefficient matrix on a second carrier frequency | ⌒120 |

| Acquire a channel coefficient covariance matrix on the second carrier frequency through a specified algorithm by using the second channel coefficient matrix acquired on M resource elements | ⌒130 |

FIG. 1

fd / fu

$\mathbf{H}_u$ → Matrix Q → $Q\mathbf{H}_u$ → Matrix P F(Q,fd/fu) → $\hat{\mathbf{H}}_d = PQ\mathbf{H}_u$

FIG. 2

Device for acquiring
channel information

Measurement
module

First processing
module

FIG. 3

Device for acquiring
channel information

First receiving
module

Second processing
module

Sending module

FIG. 4

Device for acquiring
channel information

Second receiving
module

Third processing
module

FIG. 5

Electronic device

60

Processor

61

Memory

63

Bus

Communication
interface

62

FIG. 6

# INTERNATIONAL SEARCH REPORT

| International application No. |
| --- |
| **PCT/CN2016/105105** |

### A. CLASSIFICATION OF SUBJECT MATTER

H04W 24/08 (2009.01) i

According to International Patent Classification (IPC) or to both national classification and IPC

### B. FIELDS SEARCHED

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, CNKI, WPJ, EPODOC, IEEE, 3GPP: MIMO, CSI, channel coefficient matrix, channel matrix, multicarrier, pilot signal, measurement, second, process, calculate, channel component, merge.

### C. DOCUMENTS CONSIDERED TO BE RELEVANT

| Category* | Citation of document, with indication, where appropriate, of the relevant passages | Relevant to claim No. |
| --- | --- | --- |
| X | CN 104378148 A (ACER INC.), 25 February 2015 (25.02.2015), claims 1-15 | 1-29 |
| A | CN 1859344 A (SHANGHAI INSTITUTE OF MICROSYSTEM AND INFORMATION TECHNOLOGY, CHINESE ACADEMY OF SCIENCES et al.), 08 November 2006 (08.11.2006), the whole document | 1-29 |
| A | CN 103856306 A (HUAWEI TECHNOLOGIES CO., LTD.), 11 June 2014 (11.06.2014), the whole document | 1-29 |
| A | CN 102237911 A (ZTE CORP.), 09 November 2011 (09.11.2011), the whole document | 1-29 |
| A | US 2011150117 A1 (SAMSUNG ELECTRONICS CO., LTD.), 23 June 2011 (23.06.2011), the whole document | 1-29 |

☐ Further documents are listed in the continuation of Box C.     ☒ See patent family annex.

| | | |
| --- | --- | --- |
| *    Special categories of cited documents: | "T" | later document published after the international filing date or priority date and not in conflict with the application but cited to understand the principle or theory underlying the invention |
| "A"   document defining the general state of the art which is not considered to be of particular relevance | | |
| "E"   earlier application or patent but published on or after the international filing date | "X" | document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"   document referring to an oral disclosure, use, exhibition or other means | | |
| "P"   document published prior to the international filing date but later than the priority date claimed | "&" | document member of the same patent family |

| Date of the actual completion of the international search | Date of mailing of the international search report |
| --- | --- |
| 10 January 2017 (10.01.2017) | **26 January 2017 (26.01.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **YU, Feng** Telephone No.: (86-10) **62413009** |
| --- | --- |

Form PCT/ISA/210 (second sheet) (July 2009)

## INTERNATIONAL SEARCH REPORT
### Information on patent family members

International application No.

**PCT/CN2016/105105**

| Patent Documents referred in the Report | Publication Date | Patent Family | Publication Date |
|---|---|---|---|
| CN 104378148 A | 25 February 2015 | TW 201507537 A | 16 February 2015 |
| | | US 2015043444 A1 | 12 February 2015 |
| CN 1859344 A | 08 November 2006 | None | |
| CN 103856306 A | 11 June 2014 | JP 2016506128 A | 25 February 2016 |
| | | EP 2930859 A1 | 14 October 2015 |
| | | US 2015271831 A1 | 24 September 2015 |
| | | JP 2016197921 A | 24 November 2016 |
| | | WO 2014086183 A1 | 12 June 2014 |
| CN 102237911 A | 09 November 2011 | WO 2011134187 A1 | 03 November 2011 |
| US 2011150117 A1 | 23 June 2011 | WO 2010024556 A2 | 04 March 2010 |
| | | EP 2319198 A2 | 11 May 2011 |
| | | KR 20110044876 A | 02 May 2011 |
| | | CN 101662322 A | 03 March 2010 |

Form PCT/ISA/210 (patent family annex) (July 2009)